# EUROPEAN PATENT SPECIFICATION

(11) **EP 1 963 731 B1**
(45) Date of publication and mention of the grant of the patent: **13.06.2012**
(21) Application number: 06835726.8
(22) Date of filing: 15.12.2006
(51) Int. Cl.: F16L 55/128, F16L 55/136

(54) **SMARTDUMP - J-SLOT OPERATION**
INTELLIGENTE ENTLEERUNG MIT J-SCHLITZ
DÉCHARGE INTELLIGENTE À FENTE EN FORME DE J

(30) Priority: 15.12.2005 NO 20055965
(43) Date of publication of application: 03.09.2008
(73) Proprietor: TDW Offshore Services AS, 4068 Stavanger (NO)
(72) Inventor: ALEKSANDERSEN, Jostein, N-4070 Randaberg (NO); SYSE, Harald, N-4052 Røyneberg (NO)
(74) Representative: Onsagers AS
(86) International application number: PCT/NO2006/000483
(87) International publication number: WO 2007/069910

(56) References cited:
- WO-A-94/04864
- US-A- 3 690 348
- US-A- 4 332 277

## Description

The invention regards a plug and method for operating a control system for a plug within a pipeline.

When using a removable plug within a pipeline for temporarily sealing off the pipeline one needs a control system which makes it possible to activate elements within the plug, for instance to release the plug within the pipeline after it temporarily has been sealing off the pipeline for a period. There is always a problem of transmitting control signals to the elements within the plug within a pipeline, in a safe and secure manner, this being a reliable manner, always making sure the system is responding in the manner one wants and at the same time not inadvertently activate the system when one does not want it to be activated. It is also a problem to establish solutions to activate elements within the plug, which do not require stored energy within the plug. One possible way of sending signals is to use pressure in the external fluid around the plug within the pipeline.

A plug may comprise at least one fluid operated cylinder, i.e. a chamber with a movable barrier, i.e. a piston movable within the chamber, moved by fluid pressure, for operating gripping and or sealing means of the plug. The gripping and sealing means are activated to set the plug at the desired location. By set it is meant to grip the internal wall of the pipeline to fixate the plug and seal off the pipeline preventing fluid in the pipeline from moving from one side to the other side of the plug. A plug similar to this is for instance described in the applicants own patent application No20023100, or in WO94/04864 A.

This fluid operated cylinder must in the case of releasing the plug on a regular basis or in the case of an event, have arrangements or a control system making it possible to release any pressurized fluid within the cylinder making it possible to free the gripping and sealing means. Usually there is arranged a dump valve in connection with the fluid chamber. One way of operating the dump valve can be as a response to a pressure of the fluid within the pipeline. The pressure in this external fluid can be regulated by using existing pumping systems within the pipeline, which also are used to move the plug Through the pipeline in an unset configuration. Normally one will have a system within the plug, which system reacts to a specific pressure in the fluid around the plug. To prevent this system to be activated inadvertently when the plug for instance is moved within the pipeline or after it is set, this activation pressure is normally a pressure higher than any normal operating pressure in the pipeline wherein the plug is used. Normally one will also use the pump systems associated with the pipeline to create the pressure to operate the elements in the plug.

There are two main problems with this. The pressure needed to activate the system may be to high for the pipeline and or even element of the plug , so that it may cause damages to the pipeline and or plug when building such a pressure in the pipeline. The other issue is the capacity of the pumps associated with the pipeline, there may be a need to install additional pump systems to build the necessary pressure. This gives a procedure which is both dangerous and not applicable to all pipelines, and the procedure may also be costly due to the additional equipment needed.

The object of the present invention is to overcome the above mentioned drawbacks with the known technology. It is an object to provide a system which operates within the allowable pressures at the location of setting the plug and a system where one may use existing pump systems at site. It is also an object to provide a system which with a given certainty, will not inadvertently be activated. It is also an aim to provide a system which will be operable without accessible energy within the plug.

These aims are achieved with a system and a method in accordance with the attached claims and further described in the description to follow.

There is provided a control system for operation of a plug or a device within a plug within a pipeline, which plug comprises sealing and gripping means. These sealing and gripping means may be operated by at least one fluid cylinder, operated at least partly by the control system. There may be other elements for operating the sealing and gripping means together or separately. The control system comprises means for actuation of the device and according to the invention the means for actuation of the device is responding to a repetitive fluctuation in the pressure of an external fluid around the plug.

The device to be operated may be a dump valve in connection with the fluid cylinder operating the sealing and gripping means or other devices within the plug, as for instance transponders, a control valve operating the dump valve, other fluid pressure operated elements within the plug or even switches for other elements within the plug. The means for actuation of the device and the device may be mechanically, electrically, electromagnetically, optically operating or operated or by a combination of these methods.

In one embodiment the means for actuation of the device may comprise a mechanical element with properties which makes it brake due to repetitive pressure fluctuations in the external pressure around the plug, and by braking or rupture activates the device. The properties of the mechanical element may also be responding to pressure fluctuations at a certain interval.

According to another preferred embodiment the means for actuation comprises a movable element, a guiding device and a responding element, where the movable element is moved relative to the guiding device as a response to a given pressure in the external fluid and thereby also guided to interact with the responding element, which after a given repetition of the procedure will actuate the device. The movement of the movable element and or the responding element may be linear or rotational or a combination of these.

This function may be achieved in several ways. The guiding device may be an element which allows the movable element to be moved a limited given distance in a direction when the pressure on the movable element exceeds a given pressure, for instance exceeding a friction force, a spring force or a backpressure. The movement of the movable element may by itself after a given repetitions of this procedure give contact between or brake contact between the movable element and the responding element and thereby actuation of the device. Another more preferred possibility is that the movable element interacts with the responding element, moving the responding element one step of a series of steps, during one repetition, and when the pressures are repeated the give number of times the responding element activates the device. Another possibility is that the responding element form a part of the device to be actuated, which then after a given repetition gives an activated state of the device. A similar method is to allow the moving element to move when the pressure is released below a given value and repeating this until the moving element and the responding element has activated the device.

One possibility according to the invention is to have the external pressure act against spring elements and have an one way hook and or cam system which allow movement of the movable element and or responding element in one direction but not the other direction. Another possibility is to form the system with a cam surface with a repetitive pattern as for instance a saw tooth pattern, which may be arranged in a circumferential manner, where there is at least one corresponding following surface, which follows the repetitive pattern of the cam surface as response to repetitive pressure increases and decreases set at a given value which thereby gives a rotation of an element. Preferably the moving element has a limited space for movement, making it non-responsive to pressures exceeding or falling below set values.

A skilled person will also understand that there are methods where one uses a combination of these techniques. The saw tooth pattern on the cam surface may be formed with hook like ridges preventing the cam follower to go backwards when it has moved a given distance along one cam surface. The system is preferably also formed in such a manner that the pressure may be increased above or reduces below the set value without moving the moving element any further. It is the increase or decrease of the pressure at a given pressure interval that actuates the control system one step of the number of steps needed to activate the device.

This gives that the device according to the invention may be used at any given pressure values as long as the pressure may be varied around these values of the pressure. One may use increases or decreases in pressures as the positive changing influence. The system may also be set with a varying repetitive number for achieving an actuation of the device and thereby also achieve a certainty that the device isn't inadvertently activated. By for instance having sensors reading the pressure build in the pipeline either at the plug or close to the pumping system one may with great certainty know when the device is actuated and have good control on inadvertently activation of the device.

The present invention also regards a method for operation of a control system for a plug or elements within a plug within a pipeline, wherein the plug is inserted into the pipeline, then set at position for use, activating the sealing and gripping means of the plug, then releasing the pressure in the external fluid at one side of the plug and establishing a high pressure side and a low pressure side of the plug, when means for actuation of a device of the control system reads the external fluid pressure around the plug and when reading a repetitive given fluctuation in the external fluid pressure, activates the device.

In one embodiment of the method the means for actuation comprises a control unit receiving signals of read fluid pressure and processes it so that when the changes in external pressure have been repeated a given times, the control unit gives signals to activate the device.

The device may be a dump valve for a fluid cylinder operating the gripping and sealing means.

In a preferred embodiment the system is mechanically and the means for actuation comprises a movable element, a guiding device and a responding element, where the external pressure is changed and thereby moves the movable element relative to the guiding device and in interaction with the responding element, then the external pressure is established back to its initial pressure, thereafter the procedure is repeated a given number of times until the responding element has a position where it activates the device.

According to the method the moving element and or the responding element is maid to move in a rotational and or linear motion by the guiding device.

The invention will now be explained with non-limiting embodiments with referece to the drawings where;
Fig. 1 shows a plug with gripping and sealing means,
Fig. 2A-C show a first embodiment of a control system according to the invention which may be used in a plug similar to the one shown in fig. 1,
Fig. 3A-C show a second embodiment of a control system,
Fig. 4 shows a part of the housing in fig. 3, and
Fig. 5A-E show cross sections of the second embodiment in different states.

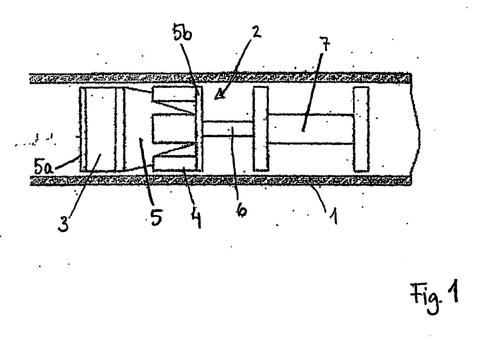

In fig. 1 there is shown one embodiment of a plug 2 wherein the control system according to the invention may be used. The plug 2 is positioned within a pipeline 1 in an unset configuration. The plug 2 comprises sealing means 3 in the form of a circumferential packer and gripping means 4 in the form of a plurality of slips moved on a cone shaped part of the main body 5 of the plug 2, which main body 5 comprises a piston cylinder (not shown). When the piston cylinder, normally a hydraulic cylinder is activated, it will pull the endplates 5a and 5b towards each other and thereby move the slips of the gripping means 4 along the cone part of the main body 5 and outward into contact with the inner wall of the pipeline 1 and at the same time press the packer of the sealing means 3 into sealing contact with the inner wall of the pipeline 1 and thereby divide the pipeline into two for the fluid in the pipeline, separated sections. In this embodiment the plug has further a control unit 7, comprising HPU and other communication means and also the control system according to the invention. The plug may be a compact plug without a linked control unit, the control unit may be arranged within the main body of the plug. The plug may have other gripping means, there may be separate activation device for the gripping and sealing means, there may be several hydraulic cylinder or gas operated cylinders within the plug. The present invention is not specifically focused on these elements of the plug, only the control system activating these different elements, and these elements will therefore not be explained in any further detail here.

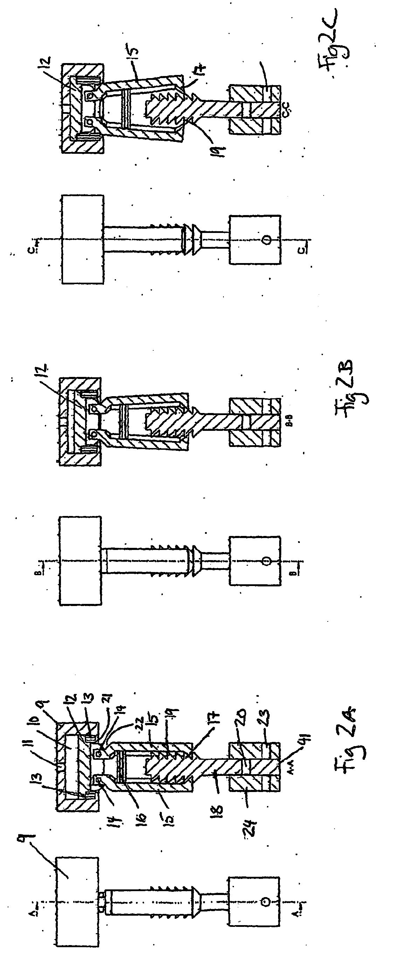

In fig. 2A-C there are shown three different cross sections of a first embodiment of at least a part of a control system according to the invention. The control system comprises an actuation device comprising a guiding device, a movable element reacting to the external pressure and a responding element. In this embodiment the guiding device comprises a housing element 9 with a piston chamber 10, with an aperture 11 giving communication between the piston chamber 10 and the outside, i.e. for instance the fluid in the pipeline. This may be directly or through a not shown tube or pipe. The movable element comprises a piston head 12 positioned within the piston chamber, where one side of the piston head 12 is in contact with and reacting to the pressure of the fluid which is allowed into the piston chamber. On the other side there is arranged first spring elements 13, which acts against the fluid pressure on the other side of the piston head 12, pre-tensioning the piston head to a position as shown in fig. 2C, the position of the piston head 12, where it is closest to the aperture 11 in the piston chamber 10, and limited from further movement in that direction by the form of the piston chamber. The form of the piston chamber 10 also limits the movement of the piston head 12 in the opposite direction, i.e. furthest away from the aperture 11 and thereby limiting the reaction of the system to not respond to pressure above or below the given set pressure values. The movable elements further comprises gripping arms 15, in the shown embodiment two arms, connected by hinges 14 to the piston head 12 for rotation about the axis of the hinge, the axis being mainly transverse to the travelling direction of the piston head 12 . There are between the gripping arms 15 arranged a second spring element 16 pulling the gripping arms 15 toward each other. The gripping arms 15 comprise in the end away from the hinged end of the gripping arms 15, an internal faced hook shape part 17. This internal hook part 17 interacts with a saw tooth part 18 of a sliding element 18, which forms part of the responding element. The sliding element 18 comprises in the other end away from the saw tooth part 18 a valve part 20, in this embodiment comprising a through going bore which will interact with a fluid path 23 in a valve housing 24 in an activated state of the device. The housing element 9 wherein the piston chamber 10 is located, further comprises cam surfaces 21 which interact with a limiting surface 22 of the gripping arms, limiting the movement of the gripping arms 15 in a direction away from each other, in one position of the piston head 13.

The action will with this configuration mean that when the piston head 12 is moved from a position close to the aperture 11 to a position away from the aperture 11 within the piston chamber 10, by the external fluid acting on the piston head 12 which also acts against and overcome the forces in the first spring elements 13, the gripping arms 15 with the internal hook part 17 interacting with the slide element 18, will move the slide element 18 a distance (in the figure downwards) since the second spring element 16 tend to keep the gripping arms 15 together. The sliding element 18 is then moved one step in the direction of establishing a continues fluid path through the valve housing 24 and the slide element 18. Whereafter the pressure in the external fluid is decreased, and the first spring elements 13 will tend to press the piston head 12 towards the position close to the aperture 11. The gripping arms 15 with its internal hook part 17, will be pulled up along the slide element 18 with its saw tooth row 19. The slide element 18 is not following the movement of the gripping arms 15 in this direction, giving that the hook part 17 will be press outwards by a saw tooth in the saw tooth row 19. When the piston head is moved all the way in the direction of the aperture, the hook part 17 of the gripping arms are moved one saw tooth in the saw tooth row 19. The cam surface 21 and the limiting surface 22 of the gripping arm 15 will also act together with the second spring element 16 to press the hooked parts of the gripping arms 15 in between the next two saw teeth in the saw tooth row 19, preparing the control system for the next increase in external pressure.

By this one has achieved a system which will move the responding element on step in a linear direction towards an activation of a device, i.e. forming a flow path, by one increase and decrease of the external pressure, dependent on the pressure to act against and together with the forces in the first spring elements but independent on any excessive maximum or minimum pressures in the external fluid.

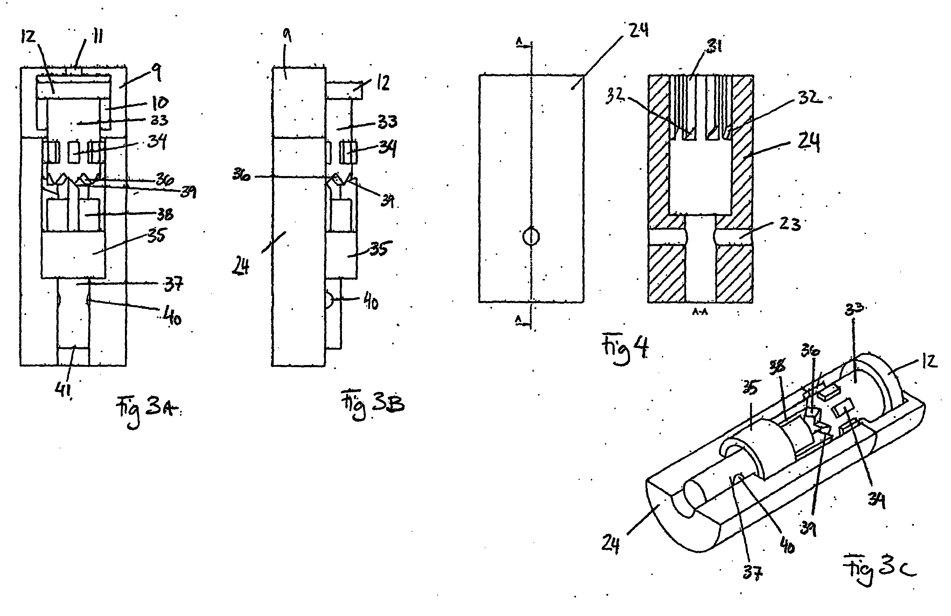

In fig. 3A-C there is shown a second embodiment of a control system according to the invention. Elements similar to those in the first embodiment is given the same reference numeral as in the previous embodiment

The second embodiment comprises a guiding element comprising a housing element 9 with an internal piston chamber 10, and an aperture 11 between the chamber 10 and an outside fluid. The housing element 9 in this embodiment is directly connected to the valve housing 24, which housing 24 has a fluid path 23, see fig. 4. The movable element comprises a piston head 12 arranged movable within the piston chamber 10, reacting on the pressure in the external fluid through aperture 11. The piston head 12 is attached to a stem element 33. The stem element 33 comprises limitation knobs 34 (best seen in fig. 3C) which interact with limitation tracks 31 (shown in fig. 4) in the valve housing 24 and thereby limits the movement of the stem element 33 relative to the valve housing 24 to a linear movement. A part of the stem element 33 comprises a tooth row cam surface 36 in a circle around the stem element 33. This tooth row cam surface 36 of the movable element interacts with a follower surface 39 of the responding element, which follower surface 39 is provided on a sleeve 38 arranged around and connected to a slide element 37 which forms the responding element. The slide element 37 comprises a bore 40, which interact with the fluid path 23 in the valve housing 24 in an activated configuration of the control system. There is between the sleeve 38 and the valve housing 24 arranged a spring element 35, which act against the pressure of the external fluid on the piston head 12 and presses and thereby keeps the follower surface 39 in abutment against the cam surface 36. The limitation track 31 comprises further a guide surface 32, in one end of the limitation track. The guide surface 32 interact with a limitation knob 32, where the form of the guide surface will tend to rotate the stem element 33 in one direction, when the limitation knob 34 comes in contact with the guide surface 32. This will cause the tooth cam surface 36 to interact with the responding element and move it to the next step in the row of steps to activate the device. The cam surface 36 will prevent the responding element form moving back to its original position.

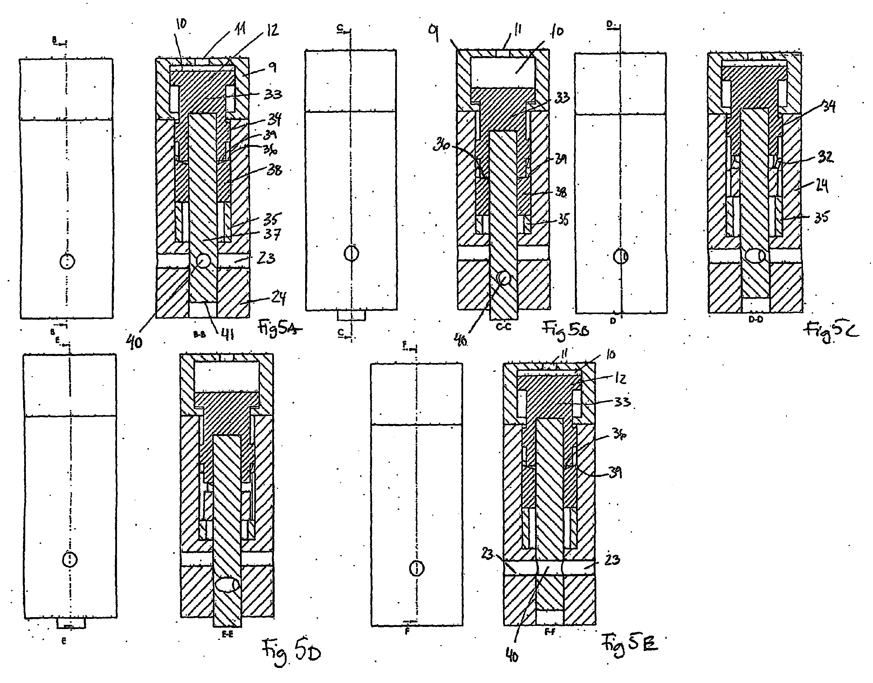

This configuration gives as shown in cross sections in fig. 5A-E, that when an external pressure presses the piston head 12 against the spring element 35, the circumferential arranged tooth row cam surface 36 interacting with the follower surface 39 and the limitation knob 34 with the guide surface 32, will cause the slide element to rotate one step, equivalent to one tooth in the tooth row cam surface 36, thereby moving the bore 40 one step towards alignment with the fluid path 23 in the valve housing 24. The limitation knobs 34 interacting with the limitation track 31, will prevent the piston head 12 and the stem element 33 from free rotation. The pressure is released and then one may repeat this step until the bore 40 is aligned with the flow path 23, as shown in fig. 5E. In this embodiment one may with an extra repetition of fluctuation of the external pressure move the slide elements in a manner so that the bore 40 is no longer aligned with the flow path, thereby inactivate the valve.

In one embodiment of the invention the external pressure on the piston head 12 may in addition to the forces of the spring element(s) 13, 35 also act against another fluid pressure for instance acting one the end part surface 41 in the opposite end of the slide element 18, 37. This other fluid pressure may be the fluid on the other side of the plug, an internal source within the plug etc.

The invention is now explained with two embodiment, one with a mostly linear movement of the responding element and one with a rotational movement of the responding element leading to an actuation of the device, in this case a valve. The device to be actuated may be another element than a valve, the limitation tracks in the second embodiment may be arranged in a separate housing element instead of the valve housing, the slide element, sleeve and follower surface may be formed in one element, the gripping arms may have an outward hook interacting with internal saw tooth rows in a circumferential arranged element, there may be one or several limitation knobs, follower surfaces, two or more gripping arms, there may be one or several repetitive steps to activate the device, this system may also be operated with a positive change of the position of the responding element with a decrease in external pressure, i.e. the spring element acts the opposite way compared with the explained embodiments, and so on. There may of course be arranged protection devices protecting the internal elements of the control system from the external fluid within the pipeline by having a buffer fluid arrangement between the external fluid and the control system. This buffer fluid arrangement may also comprises pressure enhancing elements. The system may of course be used to control an inactivation of a device, or even both activate and inactivate the device.

A skilled person will understand that several alterations and modifications may be done to the explained embodiments that are within the scope of the invention as defined in the attached claims.

## Claims

1. A plug (2) configured for operation within a pipeline (1), the plug (2) comprising a control system for operating devices within a plug (2) and sealing and gripping means (3,4), **characterized in that**
the control system comprises actuation means for actuating a device, and the actuation means is configured for responding to a repetitive fluctuation in the pressure of a plug-external fluid in the pipeline.

2. The plug according to claim 1, wherein the device is a dump valve in connection with a fluid cylinder operating the sealing (3) and or gripping means (4).

3. The plug according to one of the preceding claims, wherein the means for actuation of the device and the device is mechanically, electrically, electromagnetically, optically operated or operated by a combination of these.

4. The plug according to claim 3, wherein the means for actuation comprises a mechanically element with properties which makes it brake due to repetitive pressure fluctuations in the external pressure around the plug, and thereby activates the device.

5. The plug according to claim 4, wherein the properties are responding to pressure fluctuations at a certain interval.

6. The plug according to claim 3, wherein the means for actuation comprises a movable element (12), a guiding device (9) and a responding element (18), where the movable element is moved relative to the guiding device as response to changes of the external pressure and thereby to interact with the responding element, which after a given repetition of interaction between the movable element and the responding element will actuate the device.

7. The plug according to claim 6, wherein the movement of the movable element and or responding element is linear or rotational or a combination of these.

8. A method of operating of a control system for a plug (2) or elements within a plug (2) within a pipeline (1), wherein the plug is inserted into the pipeline, then set at position for use by operating sealing and gripping means (3,4) of the plug (2), then releasing the pressure in the external fluid at one side of the plug (2) and establishing a high pressure side and a low pressure side of the plug (2), wherein means for actuation of a device of the control system reads the external fluid pressure around the plug and when reading a repetitive given fluctuation in the external fluid pressure, activates the device.

9. The method according to claim 8, wherein the means for actuation comprises a control unit receiving signals of read fluid pressure and processes it so that when the changes in external pressure have been repeated a given times, the control unit gives signals to activate the device.

10. The method according to claim 8 or 9, wherein the device is a dump valve for a fluid cylinder operating the gripping and or sealing means.

11. The method according to one of the claim 8 or 10, wherein the means for actuation comprises a movable element, a guiding device and a responding element, where the external pressure is changed and thereby moves the movable element relative to the guiding device for interaction with the responding element, then the external pressure is established back to its initial pressure, thereafter the procedure is repeated a given times until the responding element is positioned to activate the device, which is thereby actuated.

12. The method according to claim 11, wherein the moving element and or responding element is made to move in a rotational and or linear motion by the guiding device.

## Patentansprüche

1. Pfropfen (2) zum Arbeiten innerhalb einer Rohrleitung (1), umfassend ein Steuersystem zum Betätigen von Vorrichtungen innerhalb des Pfropfens (2), sowie Dicht- und Greifmitteln (3, 4), **dadurch gekennzeichnet, dass** das Steuersystem einen Aktuator zum Betätigen einer Vorrichtung umfasst, und dass der Aktuator derart gestaltet ist, dass er auf wiederholte Fluktuation des Druckes eines dem Pfropfen umgebenden Fluids in der Rohrleitung anspricht.

2. Pfropfen nach Anspruch 1, wobei die Vorrichtung ein Auslassventil ist, das in Verbindung steht mit einem die Dicht- (3) und/oder Greifvorrichtung (4) betätigenden Fluidzylinder.

3. Pfropfen nach einem der vorausgegangenen Ansprüche, wobei der Aktuator der Vorrichtung und die Vorrichtung mechanisch, elektrisch, elektromagnetisch, optisch oder durch eine Kombination aus diesen betätigt wird.

4. Pfropfen nach Anspruch 3, wobei der Aktuator ein mechanisches Element aufweist, mit Eigenschaften, die aufgrund wiederholter Druckfluktuationen im Außendruck um den Pfropfen ein Bremsen veranlassen und dabei die Vorrichtung aktiviert.

5. Pfropfen nach Anspruch 4, wobei die Eigenschaften in einem bestimmten Intervall auf Druckfluktuationen ansprechen.

6. Pfropfen nach Anspruch 3, wobei der Aktuator ein bewegliches Element (12), eine Führungsvorrichtung (9) sowie ein Ansprechelement (18) aufweist, wobei das bewegliche Element relativ zur Führungsvorrichtung in Abhängigkeit auf Änderungen des äußeren Druckes bewegt wird und dabei mit dem Ansprechelement zusammenwirkt, welches nach einer gegebenen Wiederholung des Zusammenwirkens zwischen dem beweglichen Element und dem Ansprechelement die Vorrichtung aktiviert.

7. Pfropfen nach Anspruch 6, wobei die Bewegung des beweglichen Elementes und/oder des Ansprechelementes linear oder rotierend oder in Kombination dieser beiden wirkt.

8. Verfahren zum Betreiben eines Steuersystems für einen Pfropfen (2) oder Elementen innerhalb eines Pfropfens (2) innerhalb einer Rohrleitung (1), wobei der Pfropfen in die Rohrleitung eingesetzt wird, sodann in eine Arbeitsposition verbracht wird durch Betätigen einer Dicht- und Greifvorrichtung (3, 4) des Pfropfens (2), sodann der Druck des äußeren Fluids auf einer Seite des Pfropfens (2) entlassen wird und eine Hochdruckseite und eine Niederdruckseite des Pfropfens (2) hergestellt wird, wobei der Aktuator einer Vorrichtung des Steuersystems den externen Fluiddruck um dem Pfropfen erfasst und bei Erfassen einer wiederholten Fluktuation des externen Fluiddruckes die Vorrichtung aktiviert.

9. Verfahren nach Anspruch 8, wobei der Aktuator eine Steuereinheit aufweist, die Signale des erfassten Fluiddruckes aufnimmt und verarbeitet, sodass bei Auftreten wiederholter Änderungen des Außendruckes zu gegebenen Zeitpunkten an die Steuereinheit Signale abgibt, um die Vorrichtung zu aktivieren.

10. Verfahren nach Anspruch 8 oder 9, wobei die Vorrichtung ein Auslassventil für einen Fluidzylinder ist, das die Greif- und/oder Dichtvorrichtung betätigt.

11. Verfahren nach einem der Ansprüche 8 oder 9, wobei der Aktuator ein bewegliches Element, eine Führungsvorrichtung und ein Ansprechelement aufweist, wobei der äußere Druck verändert wird und dabei das bewegliche Element relativ zur Führungsvorrichtung bewegt, sodass dieses mit dem Ansprechelement zusammenarbeitet, worauf der äußere Druck auf seinen Ausgangswert zurückgesetzt wird, und sodann die Prozedur zu gegebenen Zeitpunkten solange wiederholt wird, bis das Ansprechelement derart positioniert ist, dass es die Vorrichtung aktiviert, die hierbei betätigt wird.

12. Verfahren nach Anspruch 11, wobei das bewegliche Element und/oder das Ansprechelement derart gestaltet sind, dass sie durch die Führungsvorrichtung eine Dreh- oder Linearbewegung ausführen.

## Revendications

1. Bouchon (2) configuré pour être utilisé à l'intérieur d'une canalisation (1), le bouchon (2) comprenant un système de commande destiné à assurer le fonctionnement de dispositifs à l'intérieur d'un bouchon (2) et des moyens d'étanchéité et de préhension (3, 4), **caractérisé en ce que**
le système de commande comprend des moyens d'actionnement destinés à actionner un dispositif, et les moyens d'actionnement sont configurés pour répondre à une fluctuation répétitive de la pression d'un fluide extérieur au bouchon dans la canalisation.

2. Bouchon selon la revendication 1, dans lequel le dispositif est une soupape de décharge en liaison avec un vérin hydraulique assurant le fonctionnement des moyens d'étanchéité (3) et de préhension (4).

3. Bouchon selon l'une quelconque des revendications précédentes, dans lequel les moyens d'actionnement du dispositif et le dispositif sont actionnés de manière mécanique, électrique, électromagnétique, optique ou actionnés par une combinaison de ces manières.

4. Bouchon selon la revendication 3, dans lequel les moyens d'actionnement comprennent un élément mécanique ayant des propriétés qui le font freiner en raison de fluctuations de pression répétitives de la pression externe autour du bouchon, et activent ainsi le dispositif.

5. Bouchon selon la revendication 4, dans lequel les propriétés répondent aux fluctuations de pression à un certain intervalle.

6. Bouchon selon la revendication 3, dans lequel les moyens d'actionnement comprennent un élément mobile (12), un dispositif de guidage (9) et un élément de réaction (18), l'élément mobile étant déplacé par rapport au dispositif de guidage en réponse à des variations de la pression externe et pour interagir ainsi avec l'élément de réaction, ce qui après une répétition d'interaction donnée entre l'élément mobile et l'élément de réaction actionnera le dispositif.

7. Bouchon selon la revendication 6, dans lequel le mouvement de l'élément mobile et/ou de l'élément de réaction est linéaire ou rotatif ou une combinaison de ceux-ci.

8. Procédé d'utilisation d'un système de commande d'un bouchon (2) ou d'éléments à l'intérieur d'un bouchon (2) à l'intérieur d'une canalisation (1), dans lequel le bouchon est inséré dans la canalisation, puis mis en position pour utilisation en actionnant les moyens d'étanchéité et de préhension (3, 4) du bouchon (2), puis en libérant la pression du fluide externe sur un côté du bouchon (2) et en établissant un côté haute pression et un côté basse pression du bouchon (2), dans lequel les moyens d'actionnement d'un dispositif du système de commande lisent la pression de fluide externe autour du bouchon et lors de la lecture d'une fluctuation donnée répétitive de la pression de fluide externe, activent le dispositif.

9. Procédé selon la revendication 8, dans lequel les moyens d'actionnement comprennent une unité de commande recevant des signaux de la pression de fluide lue et la traitent de sorte que lorsque les variations de la pression interne ont été répétées un nombre de fois déterminé, l'unité de commande donne des signaux pour activer le dispositif.

10. Procédé selon la revendication 8 ou 9, dans lequel le dispositif est une soupape de décharge pour un vérin hydraulique assurant le fonctionnement des moyens de préhension et/ou d'étanchéité.

11. Procédé selon la revendication 8 ou 10, dans lequel les moyens d'actionnement comprennent un élément mobile, un dispositif de guidage et un élément de réaction, où la pression externe est modifiée et déplace ainsi l'élément mobile par rapport au dispositif de guidage pour interaction avec l'élément de réaction, alors la pression externe est rétablie à sa pression initiale, ensuite, la procédure est répétée un nombre de fois déterminé jusqu'à ce que l'élément de réaction soit positionné pour activer le dispositif, qui est de ce fait actionné.

12. Procédé selon la revendication 11, dans lequel l'élément mobile et/ou l'élément de réaction est déplacé dans un mouvement de rotation et/ou linéaire par le dispositif de guidage.
